# FASCICULE DE BREVET EUROPEEN

(11) **EP 1 402 539 B1**
(45) Date de publication et mention de la délivrance du brevet: **11.10.2006**
(21) Numéro de dépôt: 02762508.6
(22) Date de dépôt: 02.07.2002
(51) Int. Cl.: G21C 3/62

(54) **PROCEDE DE FABRICATION D'UN MATERIAU COMBUSTIBLE NUCLEAIRE COMPOSITE CONSTITUE D'AMAS D' (U,PU)O 2? DISPERSES DANS UNE MATRICE DE UO 2?**
VERFAHREN ZUR HERSTELLUNG EINES ZUSAMMENGESETZTEN NUKLEARBRENNSTOFFMATERIALS AUS DISPERGIERTEN (U, PU)O-2--AGREGATEN
METHOD FOR MAKING A COMPOSITE NUCLEAR FUEL MATERIAL CONSISTING OF DISPERSED (U, PU)O 2? AGGREGATES

(30) Priorité: 04.07.2001 FR 0108871
(43) Date de publication de la demande: 31.03.2004
(73) Titulaire: Commissariat à l'Energie Atomique, 75752 Paris Cedex 15 (FR); COMPAGNIE GENERALE DES MATIERES NUCLEAIRES, 78140 Velizy Villacoublay (FR)
(72) Inventeur: GOTTA, Marie-Jeanne, F-04860 Pierrevert (FR); TOURY, Grégoire, F-78660 Ablis (FR); TROTABAS, Maria, F-78620 L'Etang la Ville (FR)
(74) Mandataire: Poulin, Gérard
(86) Numéro de dépôt international: PCT/FR2002/002301
(87) Numéro de publication internationale: WO 2003/005375

(56) Documents cités:
- WO-A-00/45394
- WO-A-01/03143
- FR-A- 2 622 343
- FR-A- 2 738 076
- GB-A- 2 004 256

## Description

### Domaine technique

La présente invention se rapporte à un procédé de fabrication d'un matériau combustible nucléaire composite constitué d'amas d'un mélange de poudres broyées de UO₂ et de PuO₂ dispersés dans une matrice de UO₂ de préférence appauvri en ²³⁵U.

Le composite en question possède après frittage une microstructure de type céramique-céramique (CERCER) sous la forme d'amas de solution solide (U, Pu)O₂ calibrés, relativement sphériques et dispersés au sein de la matrice UO₂.

Il s'agit d'un matériau combustible nucléaire aux propriétés de relâchement des gaz de fission améliorées.

### Art antérieur

Le combustible MOX ("Mixed Oxyde") est actuellement fabriqué industriellement par un procédé appelé MIMAS ("MIcronized MASter blend"). Ce procédé comprend successivement une étape de broyage des oxydes d'uranium et de plutonium, une étape de dilution des poudres obtenues (mélange primaire) dans de l'oxyde d'uranium (UO₂) et une étape de frittage.

Le combustible MOX issu de ce procédé a une structure présentant deux phases, une phase (U, Pu)O₂ composée de solutions solides à teneur Pu/U+Pu pouvant varier de 30 à 5% en teneur Pu et une phase UO₂. La phase (U, Pu)O₂ se trouve soit sous forme d'amas, soit sous forme de "filaments" formant un réseau continu dans le combustible.

Sous irradiation, les gaz de fission, sont essentiellement créés dans les zones plutonifères et s'implantent sur de courtes distances (7 à 9 µm) puis diffusent dans la matrice UO₂ avant d'être relâchés hors du combustible.

Le document GB2004256 décrit un procédé pour fabriquer des pastilles de combustible nucléaire d'oxyde mixte UO₂/PuO₂. Dans ce document (exemples 1 et 2) un mélange de poudres d'environ 75% de UO₂ et de 25% de PuO₂ sont mélangés et cobroyés. Ce mélange est comprimé, fritté (à 1700°C en atmosphère réductrice gaz inerte/H₂) puis concassé deux fois pour obtenir des granulés de taille moyenne 180µm (table III).Ces granulés sont ensuite re-mélangés avec de la poudre de UO₂ (82% de poudre UO₂ pour 17.5% de granulés) puis ce nouveau mélange est comprimé et fritté (à environ 1700°C en atmosphère réductrice gaz inerte/H₂) en pastilles.

Une amélioration du matériau consiste à exacerber le caractère biphasique du combustible actuel pour tendre vers un matériau isolant les zones plutonifères dans une matrice UO₂ à laquelle on souhaite faire jouer le rôle de barrière de rétention des gaz de fission.

### Exposé de l'invention

La présente invention a précisément pour but de fournir un procédé de fabrication d'un matériau composite constitué d'amas cohésifs d'un mélange de poudres broyées de UO₂ et de PuO₂ dispersé dans une matrice de UO₂ permettant d'obtenir un matériau susceptible de limiter le relâchement des gaz de fission.

Les amas cohésifs sont obtenus, selon l'invention, soit par granulation mécanique, soit par calcination du mélange primaire de UO₂ et de PuO₂.

Le procédé de la présente invention comprend les étapes suivantes :
- co-broyage à sec d'une poudre de UO₂ et d'une poudre de PuO₂ de façon à obtenir un mélange primaire homogène,
- consolidation du mélange primaire de façon à obtenir des amas cohésifs du mélange de UO₂ et de PuO₂,
- tamisage des amas entre 20 et 350 µm,
- dilution des amas tamisés dans une matrice de UO₂ de façon à obtenir un mélange de poudres,
- pastillage du mélange de poudres, et
- frittage des pastilles obtenues de façon à obtenir le composite.

Le procédé de la présente invention permet d'isoler la matière fissile constituée par les amas plutonifères de poudres broyées de UO₂ et de PuO₂ calibrés et de les répartir de manière homogène dans la matrice fertile constituée par UO₂.

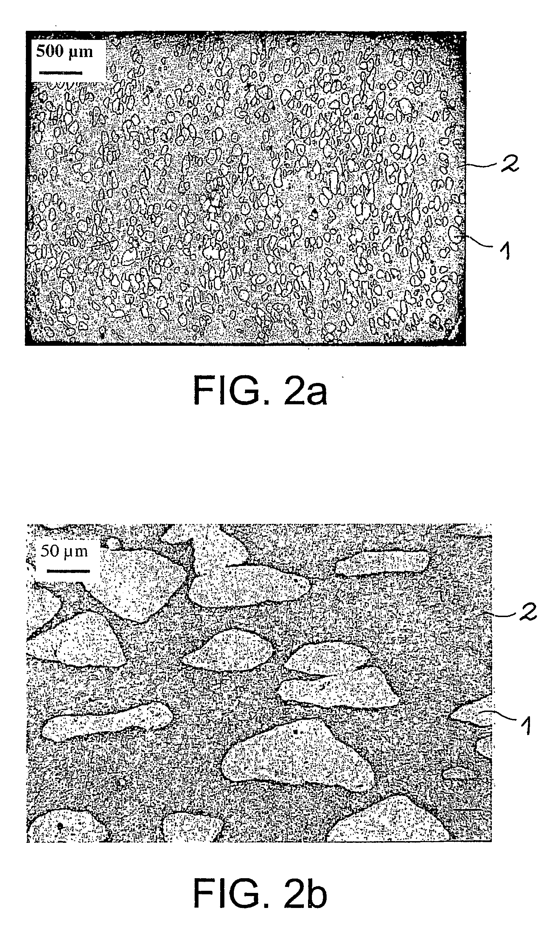

Les figures 2a), 2b) et 3 annexées représentent trois photographies de microstructures de matériaux composites frittés constitués d'amas (repère 1) d'(U,Pu)O₂ précalcinés ou granulés dispersés dans une matrice (repère 2) de UO₂.

Selon l'invention, le mélange primaire de UO₂ et de PuO₂ comprend de préférence de 60 à 90% en masse de UO₂ et de 40 à 10% en masse de PuO₂ par rapport à la masse totale du mélange, de préférence 75% en masse de UO₂ et 25% en masse de PuO₂. La masse de PuO₂ peut être remplacée en tout ou partie par des poudres de rebuts de fabrication constitués d'oxydes mixtes (U, Pu)O₂.

Selon un premier mode de réalisation de la présente invention, l'étape de consolidation du mélange de façon à obtenir des amas cohésifs peut comprendre les étapes suivantes :
- compaction du mélange primaire homogène à une pression de 150 à 600 MPa de façon à obtenir une ébauche,
- concassage de l'ébauche obtenue de façon à obtenir des granulés, et
- sphéroïdisation des granulés.

Ce premier mode de réalisation de la présente invention consiste en une granulation mécanique des compacts de mélange primaire. Cette consolidation conduit à une cohésion suffisante des amas pour supporter sans détérioration les phases ultérieures de dilution et de pastillage du procédé de la présente invention. La compaction du mélange peut être réalisée au moyen d'une presse uniaxiale simple ou double effet. Elle est de préférence réalisée à une pression de 300 MPa. Le concassage peut être réalisé par tout moyen connu approprié, par exemple dans un concasseur industriel. La sphéroïdisation des granulés peut par exemple être réalisée par simple auto-abrasion des produits concassés, par exemple dans un mélangeur de type TURBULA (marque déposée) (mélangeur à mouvement oscillo-rotatif).

Selon un second mode de réalisation de la présente invention, la consolidation du mélange primaire peut être réalisée au moyen d'un traitement thermique de calcination du mélange primaire à une température de 1000 à 1400°C, de préférence à une température de 1000°C. Le mélange primaire consolidé est le mélange de UO₂ et de PuO₂ issu du co-broyage. La calcination confère au mélange primaire un degré de cohésion suffisant pour supporter sans détérioration les phases ultérieures de dilution et de pastillage du procédé de la présente invention tout en conservant une bonne sphéricité. De préférence, le traitement thermique est réalisé sous atmosphère 95% en volume d'argon et 5% en volume d'hydrogène humidifié ou non humidifié. Lorsque l'atmosphère de traitement thermique est humidifiée, elle l'est de préférence avec un rapport de pressions partielles P_{H₂}/P_{H₂O} compris entre 50 et 20.

Le tamisage peut être réalisé au moyen d'un tamis en acier inoxydable, ayant des ouvertures de maille allant de 20 à 350 µm, de préférence de 125 à 350 µm. Ainsi, les amas cohésifs peuvent avoir une dimension (diamètre) allant de 20 à 350 µm, de préférence de 125 à 350 µm.

La dilution des amas dans la matrice de UO₂ peut être effectuée par exemple par brassage mécanique. Celui-ci ne doit de préférence pas briser les amas. Les amas peuvent être dilués dans la matrice de UO₂ à raison de 20 à 35 % en volume par rapport au volume total du mélange cru obtenu, de préférence à raison de 20% en volume par rapport au volume total de mélange cru. Ces quantités conduisent à un matériau composite comprenant avantageusement de 2,1 à 9,45% d'oxyde de plutonium.

Selon l'invention, le pastillage peut être réalisé au moyen d'une presse hydraulique uniaxiale, par exemple sous une pression de 500 MPa.

Selon l'invention, l'étape de frittage peut être réalisée à une température d'environ 1700°C. Elle peut être réalisée dans un four de frittage en suivant un cycle thermique comprenant les étapes successives suivantes :
- montée en température à 200°C/h,
- palier à environ 1700°C, et
- refroidissement à environ 400°C/h jusqu'à 1000°C, puis en suivant l'inertie du four.

L'étape de frittage est de préférence réalisée sous atmosphère 95% en volume d'argon et 5% en volume d'hydrogène non humidifié ou humidifié. Lorsque l'atmosphère de frittage est humidifiée, elle l'est de préférence avec un rapport de pressions partielles P_{H₂}/P_{H₂O} compris entre 50 et 20.

D'autres caractéristiques et avantages apparaîtront encore à la lecture des exemples qui suivent, donnés bien entendu à titre illustratif et non limitatif en référence aux dessins en annexe.

### Brève description des figures

- La figure 1 représente un organigramme de la chronologie des différentes étapes du procédé de fabrication d'un composite selon le procédé de la présente invention ;
- La figure 2a) est une photographie d'une microstructure obtenue par le procédé de granulation mécanique de la présente invention au grossissement 20, après 4 heures de frittage à 1700°C dans une atmosphère 95% Ar-5% H₂ non humidifié, d'un composite CERCER contenant 20% en volume d'amas 75% UO₂-25% PuO₂ granulés après compaction à 300 MPa (image obtenue par microscopie optique) ; et
- La figure 2b) est une photographie du matériau représenté sur la figure 2a) au grossissement 200 ; et

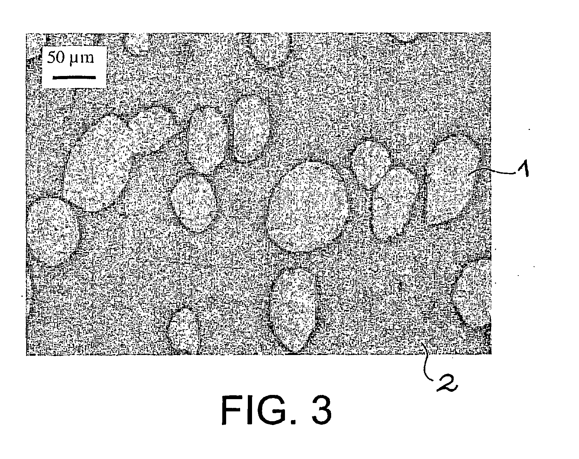

- La figure 3 représente une photographie d'une microstructure d'un matériau composite constitué d'une solution solide (U,Pu)O₂ dispersée dans une matrice de UO₂, à raison de 20% en volume d'amas consolidés par un traitement thermique à 1000°C, selon le procédé de la présente invention.

### Exemples

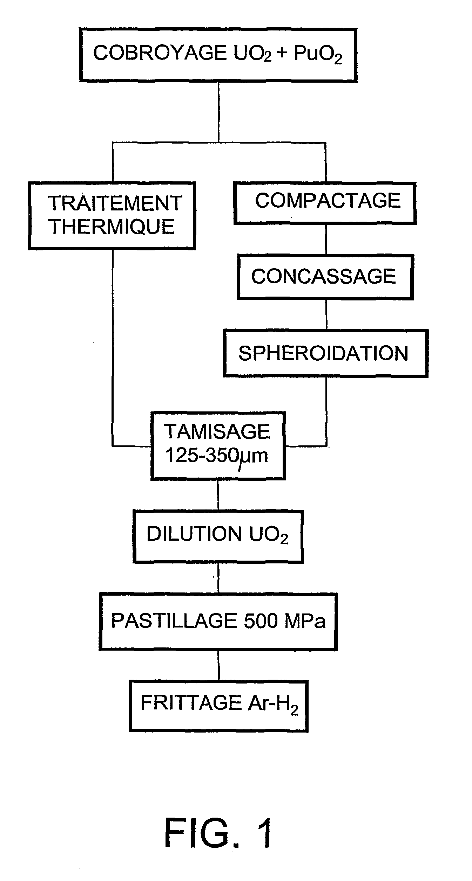

La chronologie des différentes étapes du procédé de fabrication des composites frittés constitués d'amas de solution solide (U,Pu)O₂ dispersés dans une matrice UO₂ selon le procédé de la présente invention est indiquée dans l'organigramme de la figure 1.

### Exemple 1 : co-broyage à sec des poudres de UO₂ et de PuO₂.

Différents mélanges mères homogènes des poudres de dioxyde d'uranium et de plutonium issues des procédés connus de l'art antérieur ont été réalisés avec des proportions de poudres allant de 60 à 90% en masse de UO₂ et de 40 à 10% en masse de PuO₂ par rapport à la masse totale du mélange.

Ces mélanges ont été réalisés par un co-broyage à sec des poudres brutes, dans une jarre mise en rotation à 48 tours/minute durant 6 heures. Les corps broyants étaient des galets en uranium métal. Aucun ajout organique, porogène ou lubrifiant, n'a été utilisé.

### Exemple 2 : Consolidation du mélange primaire par granulation mécanique.

Cet exemple illustre un premier mode de réalisation de l'étape de consolidation des amas du procédé de la présente invention.

Un des mélanges mères à 25% en masse de PuO₂ obtenus dans l'exemple 1 a été compacté dans différents essais à différentes pressions de granulation allant de 0 (poudre issue du co-broyage non compactée) à 600 MPa, à l'aide d'une presse uniaxiale simple effet.

Les ébauches ainsi obtenues ont ensuite été concassées manuellement dans un mortier en agate, et les produits concassés obtenus ont été sphéroïdisés par auto-abrasion par un ballon en pyrex (marque de commerce) inséré dans une jarre de broyage mise en rotation à 48 tours/minute, durant une heure et demi.

### Exemple 3 : Consolidation du mélange primaire par traitement thermique.

Cet exemple illustre un deuxième mode de réalisation de l'étape de consolidation des amas du procédé de la présente invention.

Le traitement thermique a été réalisé sur un des mélanges mères à 25% en masse de PuO₂ obtenus dans l'exemple 1, sous courant d'un mélange 95% Ar-5% H₂ non humidifié.

Le cycle thermique utilisé correspondait à une montée en température à 200°C/heure jusqu'à la température de 1000, 1200 ou 1400°C, suivie, sans palier, d'un refroidissement à 400°C/heure jusqu'à la température ambiante.

Ce traitement de consolidation a fourni des amas consolidés de bonne sphéricité, pour chaque mélange de UO₂ et de PuO₂.

### Exemple 4 : Tamisage des amas.

Les amas obtenus dans les exemples 2 et 3 ont été tamisés au moyen d'un tamis en acier inoxydable ayant des ouvertures de maille allant de 125 à 250 µm.

### Exemple 5 : Dilution des amas tamisés dans la matrice de UO₂.

Après granulation mécanique ou consolidation thermique, les amas plutonifères ont été mélangés à de la poudre de U0₂ pendant 1h30 dans un ballon placé sur les rouleaux d'entraînement d'un broyeur et tournant à la vitesse de 46 t/min.

### Exemple 6 : Pastillage du mélange cru.

La mise en forme par pastillage des composites a été réalisée au moyen d'une presse uniaxiale simple effet, fonctionnant sous une pression de 500 MPa. Une pastille de stéarate de zinc était pressée régulièrement après la réalisation de deux cylindres de composite, afin d'assurer la lubrification de la matrice de la presse. Les échantillons obtenus se présentaient sous la forme de cylindres d'environ 7 mm de diamètre et 9 mm de hauteur.

### Exemple 7: Frittage des pastilles obtenues dans l'exemple 6 de façon à former le composite.

Les échantillons placés dans une nacelle ont été frittés dans un four à cloche Degussa (marque de commerce). Le cycle thermique utilisé était le suivant :
- montée en température à 200°C/h ;
- 4h de palier à 1700°C ;
- refroidissement à 400°C/h jusqu'à 1000°C, puis en suivant l'inertie du four hors tension jusqu'à la température ambiante.

Le frittage des différents composites a été réalisé dans une atmosphère réductrice constituée par un courant de mélange 95% argon et 5% hydrogène non humidifié. Un taux d'humidité résiduel d'environ 100 ppm a été mesuré dans le gaz à la sortie du four, à température ambiante. Il correspond à un potentiel d'oxygène, ΔG°, à 1700°C de -478 kJ/moleO₂.

Les caractéristiques des amas U0₂-PuO₂ utilisés et des composites CERCER obtenus sont présentées dans le tableau 1 suivant.

**Tableau 1**

| | | **CARACTERISTIQUES DES AMAS** | | | | **CARACTERISTIQUES** | | | |
|---|---|---|---|---|---|---|---|---|---|
| | Essai n° | Teneur massique en PuO₂ | Pression de granulation (MPa) | Température de calcination (°C) | Densité apparente crue (g/cm³) | Fraction volumique d'amas | Teneur massique en PuO₂ | Densité apparente crue (g/cm³) | Densité apparente frittée (g/cm³) |
| **Granulation** | 1 | 10 | 300 | néant | 6,8 | 20,2 | 2,1 | 6,5 | 10,5 |
| | 2 | 25 | 300 | néant | 6,9 | 19,9 | 5,3 | 6,5 | 10,5 |
| | 3 | 40 | 300 | néant | 7,0 | 20,5 | 8,6 | 6,5 | 10,5 |
| | 4 | 25 | 600 | néant | 7,3 | 25,6 | 7,35 | 6,5 | 10,5 |
| | 5 | 25 | 300 | néant | 6,9 | 35,7 | 9,45 | 6,6 | 10,5 |
| **Exemple de référence** | 6 | 25 | néant | néant | 5,4 | 25,0 | 5,2 | 6,6 | 10,5 |
| **Traitement thermique** | 7 | 25 | néant | 1000 | 7,3 | 18,5 | 4,9 | 6,5 | 10,5 |
| | 8 | 25 | néant | 1200 | 8,0 | 20,2 | 5,6 | 6,5 | 10,5 |
| | 9 | 25 | néant | 1400 | 9,6 | 20,1 | 6,2 | 6,6 | 10,2 |

Les produits obtenus après frittage ont une microstructure du type de celles présentées sur les figures 2a), 2b) et 3. La distribution relativement régulière des amas plutonifères (taches blanches sur les photos) dans la matrice montre que le procédé de la présente invention de préparation des produits atteint l'objectif d'obtention d'un composite à amas individualisés renfermant la totalité de l'oxyde mixte. Compte tenu de la méthode de dilution choisie, décrite dans l'exemple 5 ci-dessus, le composite présentant les qualités requises ne peut être obtenu que si les amas plutonifères (U0₂-PuO₂) utilisés sont suffisamment cohésifs pour conserver leur intégrité pendant cette étape du procédé.

Les résultats obtenus ont montré que les amas préparés selon la présente invention par granulation mécanique ou consolidés thermiquement à 1000°C présentent les propriétés requises à la réalisation des composites.

## Revendications

1. Procédé de fabrication d'un matériau composite constitué d'amas d'un mélange de poudres broyées de UO₂ et de PuO₂ dispersés dans une matrice de UO₂ comprenant les étapes suivantes :
- co-broyage à sec d'une poudre de UO₂ et d'une poudre de PuO₂ de façon à obtenir un mélangé primaire homogène,
- consolidation du mélange primaire,
soit (i) par consolidation mécanique comprenant les étapes suivantes :
• compaction du mélange primaire homogène à une pression de 150 à 600 MPa de façon à obtenir une ébauche,
• concassage de l'ébauche obtenue de façon à obtenir des granulés, et
• sphéroïdisation des granulés ;
soit (ii) par traitement thermique de calcination du mélange primaire à une température de 1000 à 1400°C,
de façon à obtenir des amas cohésifs du mélange de UO₂ et de PuO₂,
- tamisage des amas entre 20 et 350 µm,
- dilution des amas tamisés dans une matrice de UO₂ de façon à obtenir un mélange de poudres,
- pastillage du mélange de poudres, et
- frittage des pastilles obtenues de façon à obtenir le composite.

2. Procédé selon la revendication 1, dans lequel la consolidation du mélange primaire étant réalisée par consolidation mécanique, la compaction du mélange est réalisée à une pression de 300 MPa.

3. Procédé selon la revendication 1, dans lequel la consolidation du mélange primaire étant réalisée par traitement thermique, ledit traitement est réalisé à une température de 1000°C.

4. Procédé selon la revendication 3, dans lequel le traitement thermique est réalisé sous atmosphère 95% en volume d'argon et 5% en volume d'hydrogène non humidifié ou humidifié.

5. Procédé selon la revendication 1, dans lequel les amas cohésifs tamisés ont une dimension allant de 20 à 350 µm.

6. Procédé selon la revendication 1, dans lequel la poudre de PuO₂ est remplacée en tout ou partie par une poudre de rebuts de fabrication constitués d'oxydes mixtes (U, Pu)O₂.

7. Procédé selon la revendication 1, dans lequel le mélange primaire de UO₂ et de PuO₂ comprend de 60 à 90% en masse de UO₂ et de 40 à 10% en masse de PuO₂ par rapport à la masse totale du mélange.

8. Procédé selon la revendication 1, dans lequel le mélange primaire de UO₂ et de PuO₂ comprend 75% en masse de UO₂ et 25% en masse de PuO₂ par rapport à la masse totale du mélange.

9. Procédé selon la revendication 1, dans lequel les amas cohésifs tamisés sont dilués dans la matrice de UO₂ à raison de 20 à 35 % en volume par rapport au volume total du mélange de poudres obtenu.

10. Procédé selon la revendication 1, dans lequel les amas tamisés sont dilués dans la matrice de UO₂ à raison de 20% en volume par rapport au volume total de mélange de poudres.

11. Procédé selon la revendication 1, dans lequel le pastillage est réalisé au moyen d'une presse hydraulique uniaxiale.

12. Procédé selon la revendication 1, dans lequel l'étape de frittage est réalisée à une température d'environ 1700°C.

13. Procédé selon la revendication 1,
dans lequel l'étape de frittage est réalisée dans un four en suivant un cycle thermique comprenant les étapes successives suivantes :
- montée en température à 200°C/h,
- pallier à environ 1700°C, et
- refroidissement à environ 400°C/h jusqu'à 1000°C, puis en suivant l'inertie du four,
dans lequel l'étape de frittage est de préférence réalisée sous atmosphère 95% en volume d'argon et 5% en volume d'hydrogène non humidifié ou humidifié.

## Claims

1. Process for the production of a composite material constituted by aggregates of a blend of ground UO₂ and PuO₂ powders dispersed in a UO₂ matrix comprising the following steps:
- dry co-grinding of a UO₂ powder and a PuO₂ powder so as to obtain a homogeneous primary blend,
- consolidation of the primary blend,
either (i) by mechanical consolidation comprising the following steps:
- compacting the homogeneous primary blend at a pressure of 150 to 600 MPa so as to obtain a blank,
- crushing the blank obtained so as to obtain granules and
- spheroidizing the granules;
or (ii) by calcining heat treatment of the primary blend at a temperature of 1000 to 1400°C,
so as to obtain cohesive aggregates of the UO₂ and PuO₂ blend,
- screening the aggregates between 20 and 350 µm,
- diluting the screened aggregates in a UO₂ matrix so as to obtain a blend of powders,
- pelletizing the powder blend and
- sintering the pellets obtained so as to obtain the composite.

2. Process according to claim 1, wherein the consolidation of the primary blend takes place by mechanical consolidation, the compacting of the blend taking place at a pressure of 300 MPa.

3. Process as in claim 1, wherein the consolidation of the primary blend in order to obtain cohesive aggregates is carried out using heat treatment of the primary blend at a temperature of 1000°C.

4. Process as in claim 3, wherein consolidation heat treatment is carried out in a humidified or non-humidified atmosphere of 95 vol.% argon and 5 vol.% hydrogen.

5. Process as in claim 1, wherein the size of the sieved cohesive aggregates ranges between 20 and 350 µm.

6. Process as in claim 1, wherein the PuO₂ powder is totally or partially replaced by a discarded manufactured powder comprised of mixed oxides (U, Pu)O₂.

7. Process as in claim 1, wherein the primary blend of UO₂ and of PuO₂ is comprised of 60 to 90 wt.% UO₂ and 40 to 10 wt.% PuO₂ relative to the total mass of the blend.

8. Process as in claim 1, wherein the primary blend of UO₂ and PuO₂ is comprised of 75 wt.% UO₂ and 25 wt.% PuO₂ relative to the total mass of the blend.

9. Process as in claim 1, wherein the sieved cohesive aggregates are diluted in the UO₂ matrix at a concentration of 20 to 35 vol.% relative to the total volume of the powder blend obtained.

10. Process as in claim 1, wherein the sieved cohesive aggregates are diluted in the UO₂ matrix at a concentration of 20 vol.% relative to the total volume of the powder blend.

11. Process as in claim 1, wherein pelletizing is carried out using a uniaxial hydraulic press.

12. Process as in claim 1, wherein the sintering step is carried out at a temperature of approximately 1700°C.

13. Process as in claim 1, wherein the sintering step is carried out in a furnace following a thermal cycle comprising the following successive steps of:
- raising the temperature at 200°C/hour,
- stabilizing at approximately 1700°C, and
- cooling at approximately 400°C/hour down t 1000°C, then by following furnace inertia,
wherein the sintering step is preferably carried out in a humidified or non-humidified atmosphere of 95 vol.% argon and 5 vol.% hydrogen.

## Patentansprüche

1. Verfahren zur Herstellung eines Verbundmaterials, gebildet aus Massen einer Mischung aus gemahlenen UO₂- und PuO₂-Pulvern, dispergiert in einer UO₂-Matrix, das die folgenden Schritte umfasst:
- gemeinsames Trockenmahlen eines UO₂-Pulvers und eines PuO₂-Pulvers, um eine homogene Primärmischung zu erhalten,
- Verfestigung der Primärmischung,
entweder (i) durch mechanische Verfestigung mit folgenden Schritten:
• Verdichtung der homogenen Primärmischung mit einem Druck von 150 bis 600 MPa, um einen Rohling herzustellen,
• Grobzerkleinerung des hergestellten Rohlings, um Granulate zu erhalten, und
• Kugeligglühen der Granulate;
- oder (ii) durch thermische Kalzinierungsbehandlung der Primärmischung bei einer Temperatur von 1000 bis 1400 °C, um kohäsive Massen der UO₂- und PuO₂-Mischung zu erhalten,
- Siebung der Massen zwischen 20 und 350 µm,
- Verdünnung der gesiebten Massen in einer UO₂-Matrix, um eine Pulvermischung zu erhalten,
- Tablettierung der Pulvermischung, und
- Sinterung der hergestellten Tabletten, um das Verbundmaterial zu erhalten.

2. Verfahren nach Anspruch 1, bei dem die Verfestigung der Primärmischung durch mechanisches Verfestigen realisiert wird, wobei die Verdichtung der Mischung bei einem Druck von 300 MPa erfolgt.

3. Verfahren nach Anspruch 1, bei dem die Verfestigung der Primärmischung durch thermische Behandlung realisiert wird, wobei die genannte Behandlung bei einer Temperatur von 1000 °C erfolgt.

4. Verfahren nach Anspruch 3, bei dem die thermische Behandlung unter einer Atmosphäre aus 95 Volumenprozent Argon und 5 Volumenprozent Wasserstoff, unbefeuchtet oder befeuchtet, stattfindet.

5. Verfahren nach Anspruch 1, bei dem die gesiebten kohäsiven Massen eine von 20 bis 350 µm gehende Dimension haben.

6. Verfahren nach Anspruch 1, bei dem das PuO₂-Pulver ganz oder teilweise durch ein Fabrikationsabfallpulver ersetzt wird, das durch Mischoxide (U, Pu)O₂ gebildet wird.

7. Verfahren nach Anspruch 1, bei dem die Primärmischung von UO₂ und von PuO₂ 60 bis 90 Massenprozent UO₂ und 40 bis 10 Massenprozent PuO₂ in Bezug auf die Gesamtmasse der Mischung enthält.

8. Verfahren nach Anspruch 1, bei dem die Primärmischung von UO₂ und von PuO₂ 75 Massenprozent UO₂ und 25 Massenprozent PuO₂ in Bezug auf die Gesamtmasse der Mischung enthält.

9. Verfahren nach Anspruch 1, bei dem die gesiebten kohäsiven Massen in der UO₂-Matrix in einem Verhältnis von 20 bis 35 Volumenprozent in Bezug auf das Gesamtvolumen der erhaltenen Pulvermischung verdünnt werden.

10. Verfahren nach Anspruch 1, bei dem die gesiebten kohäsiven Massen in der UO₂-Matrix in einem Verhältnis von 20 Volumenprozent in Bezug auf das Gesamtvolumen der erhaltenen Pulvermischung verdünnt werden.

11. Verfahren nach Anspruch 1, bei dem die Tablettierung mittels einer einachsigen Hydraulikpresse erfolgt.

12. Verfahren nach Anspruch 1, bei dem der Sinterschritt bei einer Temperatur von ungefähr 1700 °C erfolgt.

13. Verfahren nach Anspruch 1,
bei dem der Sinterschritt in einem Ofen durchgeführt wird, indem man einen thermischen Zyklus realisiert, der die folgenden Schritte umfasst:
- Temperaturanstieg mit 200 °C/h,
- Endstufe bei ungefähr 1700 °C, und
- Abkühlung mit ungefähr 400 °C/h bis auf 1000 °C, dann entsprechend der Ofenträgheit,
bei dem der Sinterschritt vorzugsweise unter einer Atmosphäre von 95 Volumenprozent Argon und 5 Volumenprozent Wasserstoff, unbefeuchtet oder befeuchtet, stattfindet.
